# EUROPEAN PATENT APPLICATION

(11) **EP 2 239 182 A1**
(43) Date of publication of application: **13.10.2010**
(21) Application number: 10159246.7
(22) Date of filing: 07.04.2010
(51) Int. Cl.: B62D 11/00, B62D 51/04, B62D 51/00

(54) **Electric tracked hand-truck**

(30) Priority: 07.04.2009 IT TO20090266
(71) Applicant: Active S.r.l., 26037 San Giovanni in Croce (Cremona) (IT)
(72) Inventor: Griffini, Alberto, 26034 Pontirolo (CR) (IT)
(74) Representative: Robba, Pierpaolo

(57) **Abstract**

The present invention relates to a tracked hand-truck (1) driven by an electric motor (9) and provided with a mechanical gear system (19) for transmitting the motion from the output shaft of said electric motor (9) to the track assemblies (7a,7b) of said hand-truck (1). Thanks to the provision of said mechanical gear system (19) it is possible to obtain a steering system and a standstill system that are simple, cheap and reliable. According to the invention, thanks to the combination of an electric motor (9) and a mechanical gear system (19) the speed and the energy consumption of the hand-truck (1) can be modified according to the needs of the user both by acting on the motor (9) through a first electric adjustment system and by acting on the mechanical gear system (19) through a second mechanical adjustment system, separated and independent from said first electric adjustment system.

## Description

### Technical Field

The present invention relates to an electric tracked hand-truck, i.e. an electrically driven tracked hand-truck.

More particularly, the present invention relates to an electrically driven tracked hand-truck provided with an improved steering system.

### Prior Art

Small sized industrial vehicles are largely widespread in several fields for assisting workers in loading, transporting and unloading heavy loads. Such vehicles are particularly useful in carrying out operations inside confined spaces, for instance warehouses or workrooms, and in urban areas, especially if densely populated, i.e. in situations where the use of large sized industrial vehicles, such as trucks or cranes, would be impossible due to space and manoeuvrability limitations.

As a general rule, such industrial vehicles, including forklift trucks, hand-trucks and self-propelled wagons, advance on wheels or tracks and are driven by an endothermic engine or by an electric motor. A vehicle of this kind is disclosed, by way of example, in US 2005/0196261.

More particularly, in the case of vehicles intended to be used indoor, the choice of an electric motor is imposed by obvious pollution reasons. Furthermore, the use of an electric motor is to be preferred in applications wherein the noise of the vehicles must be limited.

Since the spreading of the above-disclosed vehicles is largely due to their capability of moving in limited spaces, it is evident that their manoeuvrability is one of the essential parameters for determining the level of their performances.

More particularly, in the case of hand-trucks and other similar small sized industrial vehicles moving on tracks - which are to be preferred to wheeled vehicles in many applications - it is mandatory to provide for an effective steering system for guaranteeing a good manoeuvrability.

According to prior art the steering system of tracked hand-trucks comprises two independent motors, one for each track assembly, so that the track on the outside of the curve can be driven at higher power than the track on the inside of the curve.

For instance, in US 2005/0196261, the two track assemblies are driven by two separate independent hydraulic motors, receiving hydraulic pressure from respective pumps that in turn are connected to a power source (endothermic engine or electric motor).

Always by way of example, DE 4209665 discloses a tracked vehicle wherein each track assembly is provided with its own independent electric motor so as to allow the vehicle itself to steer.

It is evident from the above that known electric tracked hand-trucks have the drawback of having a complicated and expensive steering system, comprising a large number of pieces.

Moreover, the provision of separate motors for each track assembly requires a sophisticated electronic control system that consequently is expensive and subject to the risk of frequent failures.

Furthermore, electrically blocking a motor both for steering and standstill involves a high energy consumption and, consequently, a reduction of the vehicle endurance.

US 2006/090585 discloses a tracked hand-truck wherein the motion is transmitted from the motor to the tracks with the interposition of a mechanical gear, said mechanical gear comprising at least two steering control levers, which can be operated for controlling the steering and standstill of the tracked hand-truck. Nevertheless, the tracked hand-truck disclosed in US 2006/090585 provides for the use of an endothermic engine and therefore it is not suitable for applications wherein the noise and the pollution generated by the hand-truck itself must be limited, namely for indoor applications.

An object of the present invention is to overcome the above-mentioned drawbacks of the prior art, by providing an electric tracked hand-truck provided with an improved steering system, which is simple, cheap and reliable.

Another object of the present invention is to provide a tracked hand-truck that combines the advantages of using an electric driving system and those of using a mechanical gear system.

These and other objects are achieved by an electric tracked hand-truck according to the invention, as claimed in the appended claims.

### Disclosure of the Invention

Thanks to the fact that the electric motor driving the tracked hand-truck is connected to the track assemblies and transfers the motion thereto by interposition of a mechanical gear system, it is possible to avoid the use of separate motors and transmission systems for the different track assemblies.

According to the invention, contrary to what happens in prior art hand-trucks, steering is not obtained by driving the track assemblies with different power (higher power for the track on the outside of the curve and lower power for the track on the inside of the curve), but by appropriately blocking the different axle shafts by means of the mechanical gear system. Advantageously, the mechanical gear, besides handling the steering of the track assemblies, also acts as standstill brake, thus allowing to further reduce the number of pieces, further simplify the electronic control system and reduce the electric power consumption.

Advantageously, in the tracked hand-truck according to the invention it is possible to combine the advantages coming from the use of an electric driving system and those coming from the use of a mechanical gear system.

More particularly, when it is necessary to drive the electric hand-truck at lower speed and with lower energy consumption (for instance in case of partially exhausted supply batteries), the hand-truck according to the invention provides for a double speed adjustment system comprising:
- a first electric adjustment system connected to the electric motor and comprising means for adjusting the electric power supply, such as a potentiometer connected to the electric motor; and
- a second mechanical adjustment system, that is integrated in the mechanical gear and acts as reduction gear thanks to the possibility of choosing from a range of gears;
   said first and said second adjustment systems being independent and suitable for being selectively operated by the user according to her/his needs.

Analogously, when it is necessary to reverse the advancing direction of the electric hand-truck, the hand-truck according to the invention can advantageously provide for:
- a first electric reverse system connected to the electric motor and comprising means for reversing the electric field of the electric motor; and
- a second mechanical reverse system, that is integrated in the mechanical gear and comprises means for reversing the rotation direction of the transmission shaft;
   said first and said second reverse systems being independent and suitable for being selectively operated by the user according to her/his needs.

### Brief Description of the Drawings

Further features and advantages of the electric tracked hand-truck according to the invention will be clear to the person skilled in the art from the following detailed description of a preferred embodiment of the invention, given by way of non-limiting example, with reference to the attached drawings, wherein:
- Figure 1 is a perspective view of a preferred embodiment of the electric tracked hand-truck according to the invention;
- Figure 2 is a perspective view of the electric tracked hand-truck of Figure 1 in another operating condition and with the electric motor removed;
- Figure 3 is a side view of the electric tracked hand-truck of Figures 1 and 2;
- Figure 4 is a rear view of the electric tracked hand-truck of Figures 1 and 2;
- Figure 5 is a schematic perspective view of the mechanical gear
system of the electric tracked hand-truck of Figures 1 - 4.

### Description of a Preferred Embodiment of the Invention

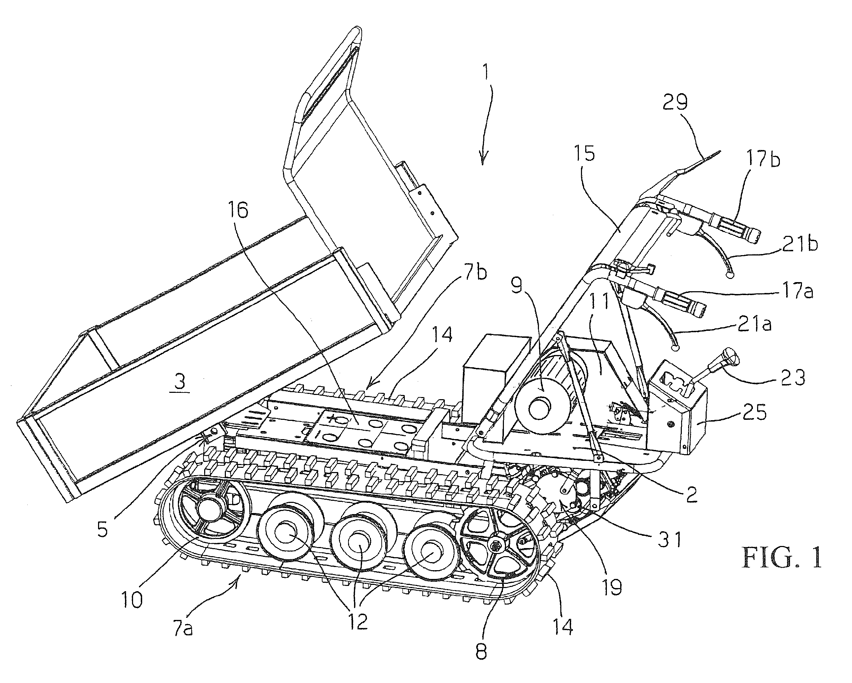

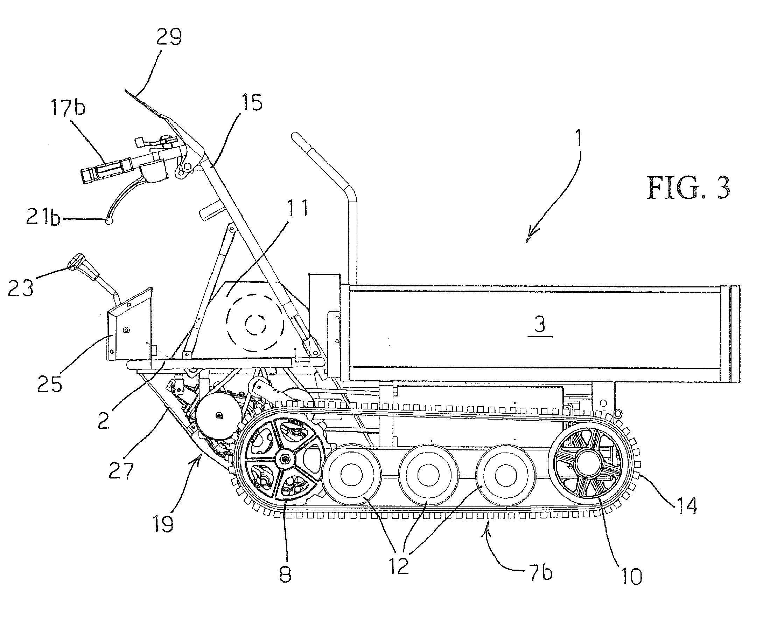

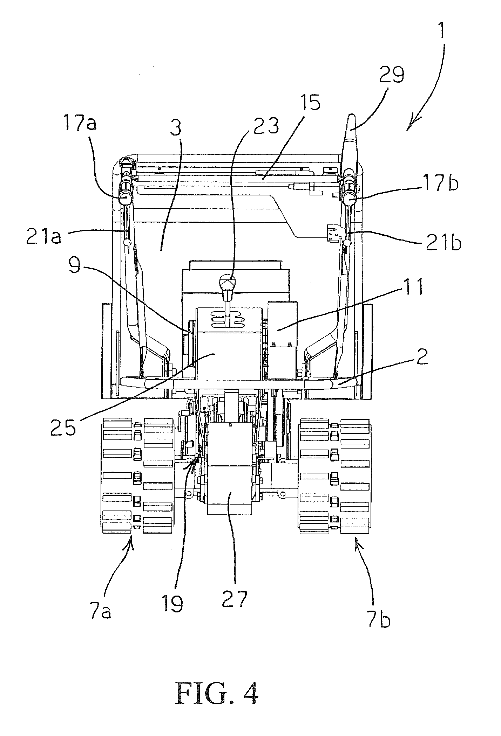

With reference to Figures 1 - 4, the invention is disclosed with reference to a preferred embodiment of the invention relating to an electric tracked hand-truck 1 with a tipping body.

In the illustrated embodiment, said hand-truck 1 comprises a frame 2, connected to a charging body 3 having a parallelepiped shape and upwardly open.

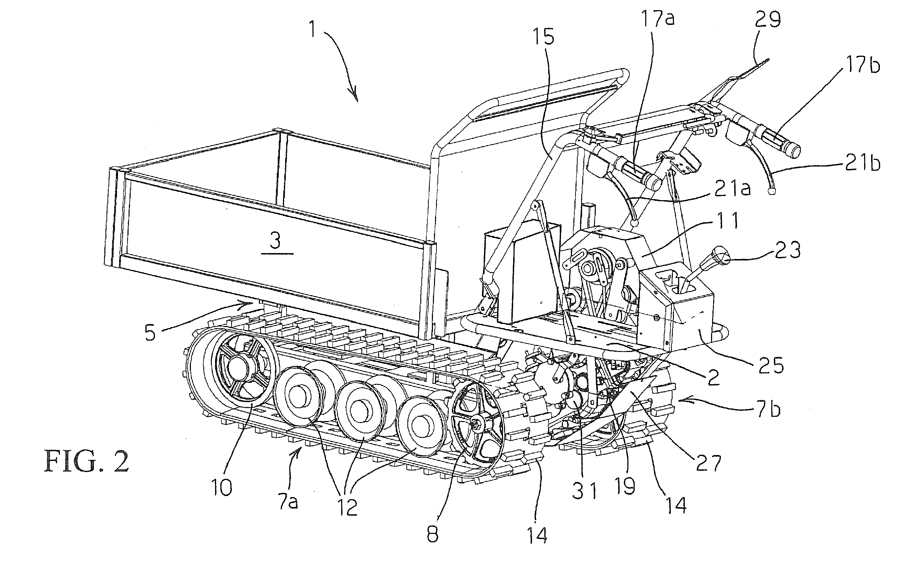

Said body 3 is connected to the frame 2 by means of a pivoting joint 5, whereby said body can assume a number of different positions with respect to said frame and, more particularly, it can pass from a first position for transporting a load, in which said body is substantially parallel to the frame (see Figure 2), to a second position for unloading said load, in which said body is inclined with respect to said frame (see Figure 1). Alternatively, the loading body 3 can be fixed with respect to the frame of the hand-truck 1 or, as an alternative, it can be replaced by a loading platform.

A handlebar 15 is connected to the frame 2 at the rear end thereof, said handlebar comprising two arms, parallel and provided on the opposite sides of said frame and ending with respective handles 17a,17b for the user.

The hand-truck 1 is further provided with a pair of track assemblies 7a,7b, parallel and provided on the opposite sides of the frame 2, each track assembly comprising at least a driving wheel 8, a take-up wheel 10 and one or more supporting wheels 12, on which a track 14 is mounted and circulates.

The track assemblies 7a,7b are driven by an electric motor 9 mounted on the frame 2 of the hand-truck 1 at the rear end of said hand-truck.

Said electric motor is supplied by batteries 16.

Moreover, according to the invention the electric motor 9 is provided with a device allowing to adjust the intensity of the electric motor supply, such as a potentiometer (not shown).

Advantageously, in the illustrated embodiment said batteries 16 are housed in the free room between the track assemblies 7a,7b and below the body 3, so as to minimize the encumbrance thereof and to lower the centre of gravity of the hand-truck 1.

The electric motor 9 has a case 11, inside which transmission lever assemblies 13 (that can be seen in Figure 2, where the electric motor 9 has been removed) connected to the output shaft of the electric motor 9 itself are housed.

The output shaft of the electric motor 9 is connected to the track assemblies 7a,7b, namely to the driving wheels 8, by interposition of a mechanical gear system, which is indicated as a whole by reference 19. Preferably, said mechanical gear system is fastened to the lower portion of the frame 2, below the electric motor 9; since the tracked hand-truck 1 could be used on severe terrains, the mechanical gear system 19 is provided with a protecting tape 27 fastened to the frame 2 for protecting the mechanical gear system 19 from filth, collisions, impacts with stones and pebbles, and so on.

The mechanical gear system 19 comprises two steering control levers 21a,21b, provided at the respective handles 17a,17b of the handlebar 15.

The steering control levers 21a,21b control the mechanical gear system 19 for blocking respective axle shafts connecting the driving wheels 8 of the respective track assemblies 7a,7b. In other words, with reference to the illustrated example, when the user intends to make a bend to the right, she/he will operate the control lever 21 b, thus blocking the axle shaft of the right track assembly 7b, so that the advancing of the sole left track assembly 7a will result in a steering of the hand-truck 1 to the right. Analogously, a bend to the left will be obtained by operating the control lever 21a, thus blocking the corresponding left track assembly 7a.

It is evident that in this way the use of separate motors for the two track assemblies 7a,7b is not necessary, since the motion is transmitted from the electric motor 9 exclusively to the track assembly that, each time, is not blocked, depending on the steering direction.

The reduction of the number of pieces of the transmission system obviously involves a simplification of the control systems.

Moreover, by simultaneously acting on both the steering control levers 21,21b the mechanical gear system 19 can be operated so as to simultaneously block the driving wheels 8 of both the track assemblies 7a,7b, so that it works as an emergency standstill brake.

According to the invention, the mechanical gear system 19 advantageously comprises a third control lever 23, housed in a corresponding gear box 25, for changing the advancing gears of the hand-truck 1.

Said third control lever can assume different positions corresponding to different configurations of the components of the mechanical gear system 19 for allowing to change the transmission ratio between the output shaft of the electric motor 9 and the driving wheels 8 of the track assemblies 7a,7b.

Thus, according to the invention, the advancing speed of the electric hand-truck can be modified:
- through an electric adjustment system allowing the adjustment of the supply of the electric motor 9 and comprising, for instance, a potentiometer;
- through a mechanical adjustment system comprising means for varying the transmission ratio between the output shaft of the electric motor 9 and the driving wheels 8 of the track assemblies 7a,7b;
   said adjustment systems being separate and independent and being suitable for being selectively operated by the user depending on her/his needs.

The possibility of adjusting the speed of the hand-truck according to the invention is particularly advantageous in case of partially exhausted batteries 16 or in case of steep slopes.

Indeed, firstly it is possible to reduce the power needed for covering a given path. It is evident to the person skilled in the art that the advancing speed does not represent an essential parameter for this kind of vehicles, while the possibility of covering a given path - especially on a slope - even with partially exhausted batteries is crucial.

Secondly, the possibility of using reduced gears allows the hand-truck 1 to go over paths having a particularly steep slope, that otherwise the hand-truck could not overcome or, at the best, could overcome with exorbitant electric power consumption.

In this way, for instance, if the hand-truck 1 is on a sloping terrain, it is possible to prevent accidental or undesirable movements of the hand-truck 1, which could be dangerous for the user.

Preferably, the third control lever 23 can also assume a position corresponding to a configuration of the components of the mechanical gear system 19 for allowing to reverse the advancing direction.

Thus, according to the invention, the advancing direction of the electric hand-truck can be modified:
- through an electric reversing system associated to the electric motor allowing to reverse the supply voltage - and therefore the electric field - of the electric motor 9;
- through a mechanical reversing system associated to the mechanical gear system 19 comprising means for reversing the rotating direction of the motion transmission shaft;
   said reversing systems being separate and independent and being suitable for being selectively operated by the user according to her/his needs. Advantageously, as shown in the Figures, the hand-truck 1 also comprises a spring-biased drive lever 29 allowing to start or stop the electric motor - and consequently the advancing of the track assemblies 7a,7b.

The drive lever 29 is pivotally mounted on the handlebar 15 at one of the handles and in the rest position of its loading spring it is in a vertical position (as shown in the Figures): in order to allow the start of the electric motor 9, the drive lever 29 must be pivoted against the spring resistance and kept parallel and close to said handle by the user; when said lever is released by the user, the spring makes it return to the initial vertical position and the electric motor 9 is stopped.

Advantageously, the drive lever 29 is also connected, by means of an appropriate transmission cable, to the drive lever 31 of a standstill brake, such as a shoe brake or a drum brake, that is operated as the motor is stopped and released as the motor is started.

In this respect, it is to be noted that since the function of standstill brake is exclusively carried out by a mechanical system, the reliability of the hand-truck according to the invention is increased, since this function will not be compromised even in case of failure of the electric system.

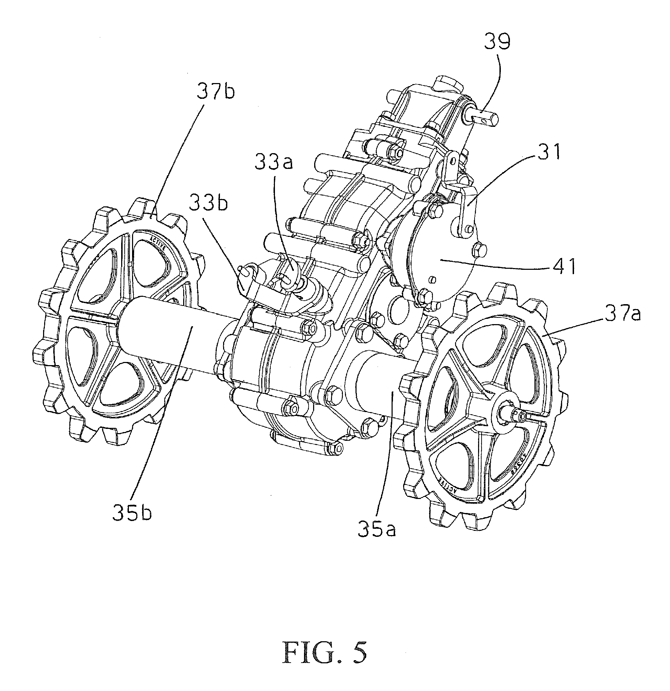

With reference to Figure 5, the mechanical gear system according to the invention is shown in detail.

More particularly, said mechanical gear system comprises a pair of steering levers 33a,33b, which are each directly operated by a corresponding steering control lever 21a,21b for respectively blocking the axle shafts 35a,35b that transmit the motion to the pinions 37a,37b of the driving wheels 8 of the tracking assemblies 7a,7b.

As shown in Figure 5, the mechanical gear system 19 further comprises a gear selector 39, controlled by the third control lever 23 for varying the advancing gears, i.e. the transmission ratio between the output shaft of the electric motor 9 and the axle shafts 35a,35b connected to the driving wheels 8 of the track assemblies 7a,7b.

In Figure 5, the drive lever 31 of the standstill brake is also shown, said drive lever being connected to the drive lever 29 and controlled thereby; said drive lever 31, in turn, controls the operation of the standstill brake 41, for instance a drum brake as in the illustrated embodiment. According to known art, the mechanical gear system also comprises a combination of toothed gears and similar mechanical transmission devices, which can vary depending on the application and which will not be disclosed in detail in this context.

It is evident from the above disclosure that the invention allows to achieve the objects set above, since it provides for a steering system that is simple, cheap and extremely reliable and in which the advantages resulting from the use of an electric motor and those resulting from the use of a mechanical gear system are combined.

It is also evident that the embodiment that has been disclosed hereabove in detail has been given by way of example only and that several modifications and variants can be made without departing from the scope of the invention as defined by the appended claims.

## Claims

1. Tracked hand-truck (1), of the kind comprising a frame (2), which is associated to a loading platform or a loading body (3) and to a pair of track assemblies (7a,7b), parallel and located on opposite sides of said frame (2), each track assembly including at least a driving wheel (8), a take-up wheel (10) and one or more supporting wheels (12), carrying a track (14), said track assemblies being driven by an electric motor mounted on said frame (2) and powered by electric batteries (16), wherein motion is directly transmitted from said electric motor (9) to said track assemblies (7a,7b) by interposition of a mechanical gear system (19), said mechanical gear system (19) comprising at least two steering control levers (21a,21b), one for each track assembly (7a,7b), each controlling said mechanical gear system (19) for allowing / preventing the motion transmission from said electric motor (9) to the corresponding track assembly (7a,7b), thus allowing said hand-truck (1) to steer, **characterized in that** the advancing speed of said electric hand-truck (1) can be modified:
- through a first electric adjustment system allowing the adjustment of the supply of the electric motor (9);
- through a second mechanical adjustment system comprising means for varying the transmission ratio between the output shaft of said electric motor (9) and the driving wheels of said track assemblies (7a,7b);
said first and second adjustment systems being separate and independent and being suitable for being selectively operated by the user depending on her/his needs.

2. Tracked hand-truck (1) according to claim 1, wherein said first electric adjustment system comprises a potentiometer associated to said electric motor (9).

3. Tracked hand-truck (1) according to claim 1, wherein said mechanical gear system (19) further comprises a third control lever (23) associated to said mechanical gear system (19), said third control lever (23) being capable of taking several different position corresponding to different configurations of said mechanical gear system (19) for allowing to vary the transmission ratio between the output shaft of said electric motor (9) and said track assemblies (7a,7b).

4. Tracked hand-truck (1) according to claim 1, wherein the advancing direction of the electric hand-truck can be modified:
- through a first electric reversing system associated to said electric motor (9) and allowing to reverse the supply voltage of said electric motor (9);
- through a mechanical reversing system associated to said mechanical gear system (19) and comprising means for reversing the rotating direction of the motion transmission shaft;
said first and second reversing systems being separate and independent and being suitable for being selectively operated by the user according to her/his needs.

5. Tracked hand-truck (1) according to claim 1, wherein the simultaneous operation of both said steering control levers (21a,21b) prevents the motion transmission from said electric motor (9) to both said track assemblies (7a,7b), thus allowing the standstill of said hand-truck (1).

6. Tracked hand-truck (1) according to claim 1, further comprising a spring-biased drive lever (29) for starting / stopping said electric motor (9).

7. Tracked hand-truck (1) according to claim 6, wherein said drive lever (29) is connected to a lever (31) controlling a standstill brake, so as to connect said standstill brake simultaneously with the electric motor stop and disconnect said standstill brake simultaneously with the electric motor start.

8. Tracked hand-truck (1) according to claim 1, comprising a tape or similar protection means (27) associated to said frame (2) for protecting said mechanical gear system (19) from dirt, collisions, impacts of stones and pebbles and the like.

9. Tracked hand-truck (1) according to claim 1, wherein a handlebar (15) is associated to said frame (2), at the rear end thereof, said handlebar comprising two arms, parallel and located on opposite sides of said frame, ending with corresponding handles (17a,17b) for the user.

10. Tracked hand-truck (1) according to claim 9, wherein said steering control levers (21a,21b) are provided at said handles (17a,17b).

11. Tracked hand-truck (1) according to any of the preceding claims, wherein said loading body (3) is connected to said frame (2) through a pivoting joint (5).

12. Tracked hand-truck (1) according to any of the preceding claims, wherein said electric batteries (16) are received in the free space between said track assemblies (7a,7b), below said loading platform or loading body (3).
